# EUROPEAN PATENT SPECIFICATION

(11) **EP 3 211 902 B1**
(45) Date of publication and mention of the grant of the patent: **17.06.2020**
(21) Application number: 15852270.6
(22) Date of filing: 29.05.2015
(51) Int. Cl.: H04N 21/258, H04N 21/239, H04N 21/24, H04N 21/262, H04N 21/643, H04N 21/222, H04N 21/226

(54) **HLS-BASED CAPABILITY CONTROL METHOD, HLS-BASED CAPABILITY CONTROL SERVICE SYSTEM, AND SLB SERVER**
HLS-BASIERTES KAPAZITÄTSSTEUERUNGSVERFAHREN, HLS-BASIERTES KAPAZITÄTSSTEUERUNGSDIENSTSYSTEM UND SLB-SERVER
PROCÉDÉ DE RÉGULATION DE CAPACITÉ À BASE HLS, SYSTÈME DE SERVICE DE RÉGULATION DE CAPACITÉ À BASE HLS, ET SERVEUR SLB

(30) Priority: 20.10.2014 CN 201410559390
(43) Date of publication of application: 30.08.2017
(73) Proprietor: ZTE Corporation, Shenzhen, Guangdong 518057 (CN)
(72) Inventor: XIONG, Wei, Shenzhen Guangdong 518057 (CN)
(74) Representative: Baudler, Ron
(86) International application number: PCT/CN2015/080342
(87) International publication number: WO 2016/062089

(56) References cited:
- WO-A1-2013/098317
- CN-A- 103 517 157
- CN-A- 103 648 019
- CN-A- 104 079 983
- CN-A- 104 080 011
- CN-A- 104 363 472
- US-A1- 2014 304 425

## Description

### Technical Field

The document relates to video content delivery network (CDN) technologies, and in particularly, to an HLS-based capability control method and service system and SLB server.

### Background

The traditional video Content Delivery Network (CDN) provides a real time streaming protocol (RTSP) service, and uses a Transmission Control Protocol (TCP) persistent connection when providing services for users. The traditional video Content Delivery Network does not have rich manners in counting of online users and capability logic control, that is, the number of the users can be counted only by using methods inherent in RTSP, and if it is cumbersome to obtain the number of the users in real time, logical development is required.

With the development of Internet videos, video CDNs begin to provide a large number of video services, to which protocols of Hyper Text Transfer Protocol Live Streaming (HLS) based on the Hypertext Transfer Protocol (HTTP) are applied. Since the video services of the HLS are all based on m3u8 and ts short connection of the HTTP, methods in the RTSP era cannot be used any more to count the online users and control node service capabilities. An m3u8 file, which is expansion of an m3u file, can implement multi-code rate adaptation. According to network bandwidth, a client will select an m3u8 file suitable for its own code rate for playing, to ensure video streams smooth. The ts short connection is an HTTP connection.

The document WO 2013098317A1 describes methods and systems for enabling network-initiated control of streaming of segmented content from a content delivery node to at least one client.

### Summary

The document provides an HLS-based capability control method and service system and SLB server, which can be applied to a video service system which is based on m3u8 and ts short connection of the HTTP.

The embodiment of the present invention provides an HLS-based capability control service system according to claim 1, a server load balancing (SLB) server according to claim 5, an HLS-based capability control method according to claim 8 and a computer readable storage medium according to claim 10. Further improvements and embodiments are provided in the dependent claims.

Also provided is an HLS-based capability control service system, including an SLB server and one or more Http Live Streaming (HLS) video servers based on a Hypertext Transfer Protocol (HTTP).

The SLB server is configured to receive an HLS HTTP request from a terminal, redirect the HLS HTTP request to an HLS video server, and return a service address of the specified HLS video server to the terminal.

The HLS video server is configured to receive an HLS HTTP request from the terminal, return a requested m3u8 index file to the terminal, establish an HTTP connection with the terminal, monitor a request status of each terminal in real time, and count online terminal users according to terminals that initiate requests.

The SLB server is configured to: receive the HLS HTTP request from the terminal, and assign a session identifier SessionID for the request; and select an HLS video server according to performance indexes of HLS video servers under administration of the SLB server, and return the assigned SessionID and a service address of the selected HLS video server to the terminal by using an HTTP 302 redirection message.

The HLS server is configured to, receive a message, from the terminal, for requesting the m3u8 index file, and record the SessionID corresponding to the terminal; return an m3u8 index file response carrying a ts connection list to the terminal, herein the m3u8 index file response carries the SessionID of the terminal; and establish an HTTP connection with the terminal; and

monitor a request status of the terminal in real time, and if the SessionID is not carried in the request and no new request is received within a preset time, determine that the terminal has been offline.

In an exemplary embodiment, the SLB server includes a service analysis module, a session control module, an HTTP redirection module and a load balancing control module.

The service analysis module is configured to analyze an HLS HTTP request from the terminal to obtain request related information corresponding to the request of the terminal, and output the obtained request related information to the session control module and the load balancing control module.

The session control module is configured to assign a SessionID to the request of the terminal according to the request related information, and output the SessionID to the HTTP redirection module.

The load balancing control module is configured to select one currently most appropriate HLS video server for the terminal according to the request related information in conjunction with performance indexes reported by HLS video servers under administration of the SLB server and output the selected HLS video server to the HTTP redirection module.

The HTTP redirection module is configured to return an HTTP 302 redirection message to the terminal, herein a service address of the selected HLS video server is carried in a Location field in HTTP header information of the message and information about the SessionID assigned to the terminal is contained in a parameter of the service address.

In an exemplary embodiment, the load balancing control module is configured to:
according to a pre-set period, use periodically an HTTP GET request to request performance index from each HLS video server under the administration of the SLB server where the load balancing control module is located; and
when the terminal initiates an HLS HTTP request to the SLB server, according to the obtained performance index of each HLS video server, select an HLS video server which has lowest load currently to provide a service, and output the selected the HLS video server to the HTTP redirection module.

In an exemplary embodiment, if currently load of each the HLS video server has reached a pre-set upper threshold, the load balancing control module is further configured to:
notify the service analysis module to reject the HLS HTTP request of the terminal, and till a load index of an HLS video server under the administration of the SLB server drops to a servable level, notify the service analysis module to accept a new HLS HTTP request.

Also provided is an SLB server, including a service analysis module, a session control module, an HTTP redirection module and a load balancing control module.

The service analysis module is configured to analyze an HLS HTTP request from a terminal to obtain request related information corresponding to the request of the terminal, and output the obtained request related information to the session control module and the load balancing control module.

The session control module is configured to assign a SessionID for the request of the terminal according to the request related information, and output the SessionID to the HTTP redirection module.

The load balancing control module is configured to select one currently most appropriate HLS video server for the terminal according to the request related information in conjunction with performance indexes reported by HLS video servers under the administration of the SLB server where the load balancing control module is located, and output the selected HLS video server to the HTTP redirection module; and
the HTTP redirection module is configured to return an HTTP 302 redirection message to the terminal, herein a service address of the selected HLS video server is carried in a Location field in HTTP header information of the message and information about the SessionID assigned to the terminal is contained in a parameter of the service address.

In an exemplary embodiment, the load balancing control module is configured to:
according to a pre-set period, use periodically an HTTP GET request to request a performance index from each HLS video server under the administration of the SLB server; and
when the terminal initiates an HLS HTTP request to the SLB server, according to the obtained performance index of each HLS video server, select an HLS video server which has lowest load currently to provide a service, and output the selected HLS video server to the HTTP redirection module.

In an exemplary embodiment, if currently load of each HLS video server has reached a pre-set upper threshold, the load balancing control module is further configured to:
notify the service analysis module to reject the HLS HTTP request of the terminal, and till a load index of an HLS video server under the administration of the SLB server drops to a servable level, notify the service analysis module to accept a new HLS HTTP request.

Also provided is an HLS-based capability control method, including:
an SLB server receives an HLS HTTP request from a terminal, redirecting the HLS HTTP request to an HLS video server, and returning a service address of the specified HLS video server to the terminal; and
an HLS video server receives an HLS HTTP request from the terminal, returns a requested m3u8 index file to the terminal, establishes an HTTP connection with the terminal, monitors a request status of each terminal in real time, and counts online terminal users according to terminals that initiate requests.

Redirecting the HLS HTTP request to an HLS video server and returning a service address of the specified HLS video server to the terminal includes:
assigning a session identifier, SessionID; and
selecting an HLS video server according to performance indexes of HLS video servers under administration of the SLB server, and returning the assigned SessionID and a service address of the selected HLS video server to the terminal by using an HTTP 302 redirection message.

The HLS video server returning a requested m3u8 index file to the terminal and establishing an HTTP connection with the terminal includes:
receiving a message, from the terminal, for requesting the m3u8 index file, recording the SessionID corresponding to the terminal, and returning an m3u8 index file response carrying a ts connection list to the terminal, herein the m3u8 index file response carries the SessionID of the terminal; and
the terminal analyzing the contained ts connection list after receiving m3u8 index file response and initiating a request for establishing an HTTP connection to the HLS video server; herein the SessionID corresponding to the terminal is carried in the request initiated by the terminal to the HLS video server.

A request status of the terminal is monitored in real time; and if the SessionID is not carried in a request and no new request is sent to the HLS video server within a preset time, the terminal is determined to have been offline.

In an exemplary embodiment, counting online terminal users includes:
the SessionID is carried in the request initiated by the terminal to the HLS video server, and the HLS video server records the SessionID of the terminal, herein, when a terminal uses a URL request carrying a SessionID to the HLS video server,
the HLS video server determines whether the HLS video server records the SessionID, and if so, 1 is added to the concurrent number corresponding to the SessionID; if the SessionID is not stored, a record of the SessionID is created and the corresponding concurrent number is recorded as 1; meanwhile, the HLS video server updates the latest time;
when the HLS video server completes an http request response corresponding to the SessionID, the HLS video server subtracts the concurrent number corresponding to the SessionID by 1 and updates the latest time; and
the HLS video server periodically scans all the SessionID information, and once the concurrent number of the SessionID is 0 and the latest time has exceeded an offline threshold time, the HLS video server determines that the terminal corresponding to the SessionID has been offline and sets a Session state to be offline.

Also provided is a computer readable storage medium in which computer executable instructions are stored. The computer executable instructions are used to execute any one of the methods described above.

Compared with the existing art, the technical scheme of the present invention includes an SLB server and one or more HLS video servers. Herein, the SLB server is configured to receive an HLS HTTP request from a terminal, redirect the HLS HTTP request to an HLS video server in an HTTP 302 manner, and return a service address of the specified HLS video server to the terminal. The HLS video server is configured to receive an HTTP short connection request from the terminal, monitor a request status of each terminal in real time, and count online terminal users according to terminals that initiate requests. The HLS-based capability control system provided by the document is applicable to the video service system based on the m3u8 and ts short connection of the HTTP, and implements the counting of the online users of the HLS video server.

### Brief Description of the Drawings

Figure 1 is a structural schematic diagram of an HLS-based capability control service system according to an embodiment of the present invention.
FIG. 2 is a structural schematic diagram of an SLB server according to an embodiment of the present invention.
FIG. 3 is a flowchart of an embodiment of an HLS-based capability control method according to an embodiment of the invention.

### Detailed Description

Embodiments of the present invention will be described in detail below in conjunction with accompanying drawings. It should be noted that the embodiments in the present invention and features in the embodiments can be arbitrarily combined with each other without conflict.

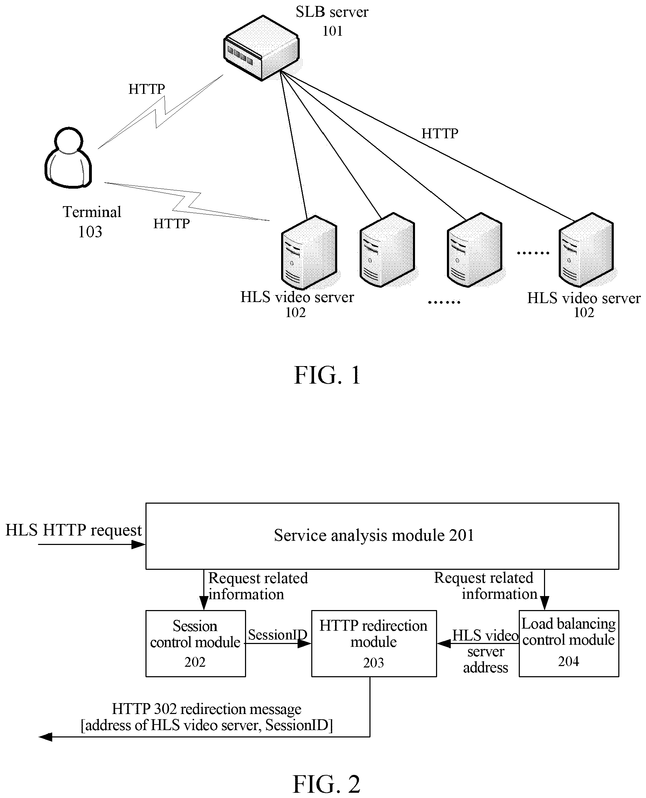

FIG. 1 is a structural schematic diagram of an HLS-based capability control service system according to an embodiment of the present invention. As shown in FIG. 1, the HLS-based capability control service system includes at least a server load balancing (SLB) server 101 and one or more HLS video servers 102.

The SLB server 101 is configured to receive an HLS HTTP request from a terminal 103, redirect the HLS HTTP request to an HLS video server 102 in an HTTP 302 manner, and return a service address of the specified HLS video server to the terminal 103.

The HLS video server 102 is configured to receive an HLS HTTP request from the terminal 103, return a requested m3u8 index file to the terminal 103, establish an HTTP connection with the terminal 103, monitor a request status of each terminal 103 in real time, and count online terminal users according to terminals 103 that initiate requests.

The SLB server 101 is configured to receive an HLS HTTP request from the terminal, and assign a session identifier (SessionID) for the request; and select an HLS video server 102 according to performance indexes of HLS video servers under administration of the SLB server, and return the assigned SessionID and a service address of the selected HLS video server to the terminal 103 by using an HTTP 302 redirection message.

Herein, the HLS HTTP request is directly from the terminal 103, and the terminal 103 requests an m3u8 index file from the selected HLS video server 102 according to the service address carried in the HTTP 302 redirection message. After receipt of an m3u8 index file response, the terminal 103 analyzes the contained ts connection list and initiates a request for establishing an HTTP connection to the HLS video server 102. Herein, the SessionID corresponding to the terminal 103 is carried in the request initiated by the terminal 103 to the HLS video server 102.

The HLS video server 102 is configured to receive a message, from the terminal 103, for requesting the m3u8 index file, record the SessionID corresponding to the terminal 103, return an m3u8 index file response carrying the ts connection list to the terminal 103, herein the m3u8 index file response carries the SessionID of the terminal 103, and establish an HTTP connection with the terminal 103; and monitor a request status of the terminal 103 in real time, and if the SessionID is not carried in the request and no new request is sent to the HLS video server 102 within a preset time, determine that the terminal 103 has been offline to counter online terminal users.

The HLS-based capability control system provided by embodiments of the present invention is applicable to a video service system based on an m3u8 and ts short connection of the HTTP, and implements counting of online users of the HLS video server.

Since the SLB server can clearly know the number of users assigned to each terminal according to the SessionID information, when a new user becomes online, allocation of a node to which the user belongs is facilitated. The system performs user allocation in real time according to the load status corresponding to each node, to select and allocate a node with the least load and the most resources to the user, thereby facilitating resource allocation and cluster scheduling of the entire system. When the system is attacked, an exact location of a node where the attack begins and information about an attacker will be achieved through the user's SessionID, to facilitate security defense of the system and hacker locking.

FIG. 2 is a structural schematic diagram of an SLB server according to an embodiment of the present invention. As shown in FIG. 2, the SLB server includes a service analysis module 201, a session control module 202, an HTTP redirection module 203, and a load balancing control module 204.

The service analysis module 201 is configured to analyze the HLS HTTP request from the terminal to obtain request related information corresponding to the request of the terminal, such as CP, service type, user personal information, and home information of the user and so on, and output the obtained request related information to the session control module 202 and the load balancing control module 204.

A series of user personal information, such as user terminal ID, Internet Protocol (IP) address, port number, area information of the user, user name, password and so on, and home information of the user are contained in the HLS HTTP request. Part of the information, such as ID number of the user terminal, the user name and the password and the like related information, needs to be output to the session control module 202, and is used by the session control module 202 to allocate a SessionID to the user. Other information, such as the CP, the service type, the area information of the user, IP address information and the like related information, needs to be output to the load balancing control module 204, and is used by the load balancing control module 204 to implement distribution of servers, thereby facilitating control of load balancing.

The session control module202 is configured to assign the SessionID for the request of the terminal according to the request related information, and output the SessionID to the HTTP redirection module 203.

The load balancing control module 204 is configured to select a currently most appropriate HLS video server for the terminal according to the request related information in conjunction with the performance indexes reported by the HLS video servers under the administration of the SLB server at which the load balancing control module 204 is located and output the selected HLS video server to the HTTP redirection module 203.

The HTTP redirection module 203 is configured to return the HTTP 302 redirection message to the terminal. A service address of the selected HLS video server is carried in a Location field in HTTP header information of the message and information about the SessionID assigned to the terminal is contained in a parameter of the service address.

In the embodiment of the present invention, since the SessionID is contained in a valid service address, the accurate accounting of the online users is implemented and the most reasonable load distribution is performed.

The load balancing control module 204 is configured to:
according to a preset period, use an HTTP GET request periodically to request a performance index of each HLS video server under the administration of the SLB server, herein the performance index includes but is not limited to: the maximum bandwidth allowed by the server, the current bandwidth of the server, the maximum concurrent number allowed by the server, the current concurrent number of the server, the maximum number of online users allowed by the server, and the number of current online users; and
when the terminal initiates an HLS HTTP request to the SLB server, based on the obtained performance index of each HLS video server, select an HLS video server which has lowest load currently to provide a service, and output the selected HLS video server to the HTTP redirection module 203.

A dynamic algorithm may be used for the selection of the HLS video server. For example, the algorithm may use a weighted allocation manner to perform weighted comparison on all HLS video servers. That is, sub-weighted computing is performed according to the capability of each of the HLS video servers, for example, a weight used by an HLS video server with high capability is different from that used by an HLS video server with poor capability, and the obtained results are different too. After the end of the sub-weighted computing of the HLS video server, a sub-weighted algorithm is processed according to information of the terminal. Finally, allocation of the HLS video servers is performed according to the final weight obtained by adding the two weights. If a situation that two weights are the same occurs, another algorithm of the same weight is performed to compare capabilities of the HLS video servers, and then compare other indices for allocation. If currently the load of each HLS video server has reached a pre-set upper threshold, the load balancing control module 204 is further configured to notify the service analysis module 201 to reject the HLS HTTP request of the terminal, and till a load index of the HLS video server under the administration of the SLB server drops to a servable level, notify the service analysis module 201 to accept a new HLS HTTP request.

Corresponding to the capability control system according to the embodiments of the present invention, an HLS-based capability control method according to the embodiments of the present invention includes: an SLB server receives an HLS HTTP request from a terminal, redirects the HLS HTTP request to an HLS video server in an HTTP 302 manner, and returning a service address of the specified HLS video server to the terminal; and an HLS video server receives the HLS HTTP request from the terminal, returns the requested m3u8 index file to the terminal, establishes an HTTP connection with the terminal, monitors a request status of each terminal in real time, and counts online end users according to terminals that initiate requests.

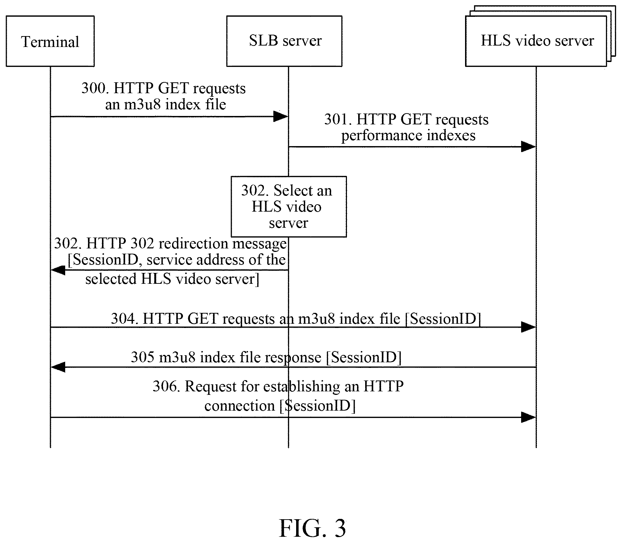

FIG. 3 is a flowchart of an HLS-based capability control method according to an embodiment of the present invention. As shown in FIG. 3, the HLS-based capability control method includes the following steps 300-306.

In step 300, the terminal initiates an HTTP Get request to the SLB server to requests an HLS m3u8 index file. At the same time, a SessionID is assigned for the request.

In step 301, the SLB server initiates an HTTP Get request to each HLS video server under its administration to obtain a performance index of each HLS video server.

In step 302, each HLS video server reports its performance index to the SLB server. Here the performance index indicates the current operating status of the HLS video server, and is the index used when the SLB server allocates the HLS servers by using the weighting algorithm, which includes information, such as the current number of online users of the HLS video server (i.e., the number of independent sessions), the current number of concurrent connections, traffic of a server network adapter, etc.

In step 303, the SLB server determines the performance index of each server according to the pre-set weighted allocation manner, selects the currently most appropriate HLS video server, and directs a service URL to the HLS video server; and returns the SessionID assigned for the terminal and the service address of the selected HLS video server to the terminal by using an HTTP 302 redirection message such that the request of the terminal is redirected to the selected HLS video server.

A dynamic algorithm may be used for the selection of the HLS video server. For example, weighted comparison may be completed on all HLS video servers by using a weighted allocation manner. That is, sub-weighted computing is performed according to the capability of each of the HLS video servers, for example, a weight used by an HLS video server with high capability is different from that used by an HLS video server with poor capability, and the obtained results are different too. After the end of the sub-weighted computing of the HLS video server, a sub-weighted algorithm is processed according to information of the terminal. Finally, allocation of the HLS video servers is completed according to the final weight obtained by adding the two weights. If a situation that two weights are the same occurs, another algorithm of the same weight is performed to compare capabilities of the HLS video servers, and then compare other indices for allocation.

In step 304, the terminal reinitiates an HTTP GET request for requesting the m3u8 index file to the selected HLS video server according to the service address carried in the HTTP 302 redirection message.

In step 305, the HLS video server records the SessionID of the request of the terminal and returns an m3u8 index file response to the terminal, herein, the SessionID of the terminal is carried in the ts request information in contents of the m3u8 index file.

In step 306, after receiving the m3u8 index file, the terminal analyzes a ts connection list contained in the m3u8 index file and initiates a request for establishing an HTTP connection to the HLS video server, herein the SessionID of the terminal is carried in the request.

The HLS video server monitors a request status of each terminal in the subsequent interaction with the terminal, and when the SessionID is not carried in the request in service and no new request is sent to the HLS video server within a preset time, determines that the terminal has been offline.

The terminal carries the SessionID in the request initiated by the terminal to the HLS video server, and the HLS video server records the SessionID of the terminal. When a terminal uses a URL request carrying the SessionID to the HLS video server, the HLS video server determines first whether the HLS video server itself records the SessionID. If so, 1 is added to the concurrent number corresponding to the SessionID; and if the SessionID is not stored, a record of the SessionID is created and the corresponding concurrent number is recorded as 1. Meanwhile, the HLS video server updates the latest time.

When the HLS video server completes an http request response corresponding to the SessionID, the HLS video server subtracts the concurrent number corresponding to the SessionID by 1 and updates the latest time.

The HLS video server periodically scans all the SessionID information, and when the concurrent number of the SessionID is 0 and the latest time has exceeded an offline threshold time, the HLS video server determines that the terminal corresponding to the SessionID has been offline and sets a Session state to be offline.

Those ordinarily skilled in the art can understand that all or some of the steps of the abovementioned embodiments may be implemented by using a computer program process. The computer program may be stored in a computer readable storage medium. The computer program may be executed on an appropriate hardware platform (such as a system, device, apparatus, component, and so on), and during the execution, one of the steps of the method embodiment or a combination thereof are included.

Alternatively, all or some of the steps of the abovementioned embodiments may also be implemented by using integrated circuits, or these steps may be implemented by manufacturing individual integrated circuit modules respectively, or some of the modules or steps may be implemented by manufacturing a single integrated circuit module.

Devices/functional modules/functional units in the abovementioned embodiments may be implemented by using general purpose computing devices, and they may be concentrated on a single computing device or distributed among a network including a plurality of computing devices.

When the devices/functional modules/functional units in the abovementioned embodiments are implemented in the form of software functional module and sold or used as an independent product, they may be stored in a computer readable storage medium. The abovementioned computer readable storage medium may be a read-only memory, magnetic or optical disk, and the like.

### Industrial Applicability

The HLS-based capability control system provided in the document is applicable for video service systems based on m3u8 and ts short connection of the HTTP, and implements counting of online users of the HLS video server. Since the SLB server can clearly know the number of users assigned to each terminal according to the SessionID information, when a new user becomes online, allocation of a node to which the user belongs is facilitated. The system performs user allocation in real time according to the load status corresponding to each node, to select and allocate a node with the least load and the most resources to the user, thereby facilitating resource allocation and cluster scheduling of the entire system. When the system is attacked, an exact location of a node where the attack begins and information of an attacker will be achieved through the user's SessionID, to facilitate security defense of the system and hacker locking.

## Claims

1. An HLS-based capability control service system, comprising a server load balancing, SLB, server (101) and one or more Hyper Text Transfer Protocol Live Streaming, HLS, video servers (102) based on a Hyper Text Transfer Protocol, HTTP, wherein
the SLB server is configured to receive an HLS HTTP request from a terminal (103), redirect the HLS HTTP request to an HLS video server, and return a service address of the specified HLS video server to the terminal; and
the specified HLS video server is configured to receive an HLS HTTP request from the terminal, return a requested m3u8 index file to the terminal, establish an HTTP connection with the terminal;
**characterized in that**, the HLS video server is further configured to monitor a request status of each terminal in real time, and count online terminal users according to terminals that initiate requests;
wherein the SLB server is configured to, receive the HLS HTTP request from the terminal, and assign a session identifier, SessionID, for the request; and select an HLS video server according to performance indexes of HLS video servers under administration of the SLB server, and return the assigned SessionID and a service address of the selected HLS video server to the terminal by using an HTTP 302 redirection message;
the specified HLS video server is configured to, receive a message, from the terminal, for requesting the m3u8 index file, and record the SessionID corresponding to the terminal; return an m3u8 index file response carrying a ts connection list to the terminal, wherein the m3u8 index file response carries the SessionID of the terminal; and establish an HTTP connection with the terminal; and
monitor a request status of the terminal in real time, and if the SessionID is not carried in the request and no new request is received within a preset time, determine that the terminal has been offline.

2. The HLS-based capability control service system according to claim 1, wherein the SLB server comprises a service analysis module, a session control module, an HTTP redirection module and a load balancing control module, wherein
the service analysis module is configured to analyze an HLS HTTP request from the terminal to obtain request related information corresponding to the request of the terminal, and output the obtained request related information to the session control module and the load balancing control module;
the session control module is configured to assign the SessionID to the request of the terminal according to the request related information, and output the SessionID to the HTTP redirection module;
the load balancing control module is configured to select the one currently most appropriate HLS video server for the terminal according to the request related information in conjunction with performance indexes reported by HLS video servers under administration of the SLB server and output the selected HLS video server to the HTTP redirection module; and
the HTTP redirection module is configured to return the HTTP 302 redirection message to the terminal, wherein a service address of the selected HLS video server is carried in a Location field in HTTP header information of the message and information about the SessionID assigned to the terminal is contained in a parameter of the service address.

3. The HLS-based capability control service system according to claim 2, wherein the load balancing control module is configured to,
according to a pre-set period, use periodically an HTTP GET request to request a performance index from each HLS video server under the administration of the SLB server where the load balancing control module is located; and
when the terminal initiates an HLS HTTP request to the SLB server, according to the obtained performance index of each HLS video server, select an HLS video server which has lowest load currently to provide a service, and output the selected the HLS video server to the HTTP redirection module.

4. The HLS-based capability control service system according to claim 3, wherein if currently load of each the HLS video server has reached a pre-set upper threshold, the load balancing control module is further configured to,
notify the service analysis module to reject the HLS HTTP request of the terminal, and till a load index of an HLS video server under the administration of the SLB server drops to a servable level, notify the service analysis module to accept a new HLS HTTP request.

5. A server load balancing, SLB, server (101), including a service analysis module (201), a session control module (202), a Hyper Text Transfer Protocol, HTTP, redirection module (203) and a load balancing control module (204), wherein
the service analysis module is configured to analyze a Hyper Text Transfer Protocol Live Streaming, HLS, HTTP request from a terminal (103) to obtain request related information corresponding to the request of the terminal, and output the obtained request related information to the session control module and the load balancing control module;
**characterized in that** the session control module is configured to assign a session identifier, SessionID, for the request of the terminal according to the request related information, and output the SessionID to the HTTP redirection module;
the load balancing control module is configured to select one currently most appropriate HLS video server for the terminal according to the request related information in conjunction with performance indexes reported by HLS video servers (102) under administration of the SLB server where the load balancing control module is located, and output the selected HLS video server to the HTTP redirection module; and
the HTTP redirection module is configured to return an HTTP 302 redirection message to the terminal, wherein a service address of the selected HLS video server is carried in a Location field in HTTP header information of the message and information about the SessionID assigned to the terminal is contained in a parameter of the service address.

6. The SLB server according to claim 5, wherein the load balancing control module is configured to:
according to a pre-set period, use periodically an HTTP GET request to request a performance index from each HLS video server under the administration of the SLB server; and
when the terminal initiates an HLS HTTP request to the SLB server, according to the obtained performance index of each HLS video server, select an HLS video server which has lowest load currently to provide a service, and output the selected HLS video server to the HTTP redirection module.

7. The SLB server according to claim 6, wherein if currently load of each HLS video server has reached a pre-set upper threshold, the load balancing control module is further configured to,
notify the service analysis module to reject the HLS HTTP request of the terminal, and till a load index of an HLS video server under the administration of the SLB server drops to a servable level, notify the service analysis module to accept a new HLS HTTP request.

8. An HLS-based capability control method, comprising:
a server load balancing, SLB, server receiving (300) a Hyper Text Transfer Protocol Live Streaming, HLS, Hyper Text Transfer Protocol, HTTP, request from a terminal, redirecting (301, 302) the HLS HTTP request to an HLS video server, and returning (303) a service address of the specified HLS video server to the terminal; and
the specified HLS video server receiving (304) an HLS HTTP request from the terminal, returning (305) a requested m3u8 index file to the terminal, establishing (306) an HTTP connection with the terminal;
**characterized in that**, the method further comprises:
the HLS video server monitoring a request status of each terminal in real time, and counting online terminal users according to terminals that initiate requests;
wherein the redirecting the HLS HTTP request to an HLS video server, and returning a service address of the specified HLS video server to the terminal comprises:
assigning a session identifier, SessionID; and
selecting (302) an HLS video server according to performance indexes of HLS video servers under administration of the SLB server, and returning (303) the assigned SessionID and a service address of the selected HLS video server to the terminal by using an HTTP 302 redirection message;
the specified HLS video server returning a requested m3u8 index file to the terminal, and establishing an HTTP connection with the terminal comprises:
receiving a message, from the terminal, for requesting the m3u8 index file, recording the SessionID corresponding to the terminal, and returning an m3u8 index file response carrying a ts connection list to the terminal, wherein the m3u8 index file response carries the SessionID of the terminal; and
the terminal analyzing the contained ts connection list after receiving m3u8 index file response and initiating a request for establishing an HTTP connection to the HLS video server; wherein the SessionID corresponding to the terminal is carried in the request initiated by the terminal to the HLS video server;
wherein a request status of the terminal is monitored in real time, and if the SessionID is not carried in a request and no new request is sent to the HLS video server within a preset time, the terminal is determined to have been offline.

9. The HLS-based capability control method according to claim 8, wherein counting online terminal users comprises:
the SessionID being carried in the request initiated by the terminal to the HLS video server, and the HLS video server recording the SessionID of the terminal, wherein when a terminal uses a URL request carrying a SessionID to the HLS video server,
the HLS video server determines whether the HLS video server records the SessionID, and if so, 1 is added to a concurrent number corresponding to the SessionID; if the SessionID is not stored, a record of the SessionID is created and the corresponding concurrent number is recorded as 1; meanwhile, the HLS video server updates the latest time;
when the HLS video server completes an http request response corresponding to the SessionID, the HLS video server subtracts the concurrent number corresponding to the SessionID by 1 and updates the latest time; and
the HLS video server periodically scans all the SessionID information, and once the concurrent number of the SessionID is 0 and the latest time has exceeded an offline threshold time, the HLS video server determines that the terminal corresponding to the SessionID has been offline and sets a Session state to be offline.

10. A computer readable storage medium in which computer executable instructions are stored, **characterized in that**, the computer executable instructions are used to execute the method according to claim 8 or 9.

## Patentansprüche

1. Ein HLS-basiertes Kapazitätssteuerungsservicesystem, das einen Server (101) mit Lastausgleich (SLB) und einen oder mehrere Videoserver (102) mit Hyper Text Transfer Protocol Live Streaming (HLS) basierend auf einem HTTP (Hyper Text Transfer Protocol) umfasst, wobei
der SLB-Server konfiguriert ist, eine HLS-HTTP-Anfrage von einem Endgerät (103) zu empfangen, die HLS-HTTP-Anfrage an einen HLS-Videoserver umzuleiten und eine Serviceadresse des angegebenen HLS-Videoservers an das Endgerät zurückzugeben; und
der angegebene HLS-Videoserver konfiguriert ist, eine HLS-HTTP-Anfrage vom Endgerät zu empfangen, eine angefragte m3u8-Indexdatei an das Endgerät zurückzugeben und eine HTTP-Verbindung mit dem Endgerät herzustellen;
**dadurch gekennzeichnet, dass** der HLS-Videoserver ferner konfiguriert ist, einen Anfragestatus jedes Endgerätes in Echtzeit zu überwachen und Online-Endgerät-Benutzer entsprechend den Endgeräten zu zählen, die Anfragen initiieren;
wobei der SLB-Server konfiguriert ist, die HLS-HTTP-Anfrage vom Endgerät zu empfangen und eine Sitzungskennung (SessionID) für die Anfrage zuzuweisen; und einen HLS-Videoserver gemäß Leistungsindizes von HLS-Videoservern unter Verwaltung des SLB-Servers auszuwählen und die zugewiesene SessionID und eine Serviceadresse des ausgewählten HLS-Videoservers unter Verwendung einer HTTP-Umleitungsnachricht (302) an das Endgerät zurückzugeben;vv
der specified HLS-Videoserver konfiguriert ist,
eine Nachricht vom Endgerät zu empfangen, um die m3u8-In-dexdatei anzufragen, und die dem Endgerät entsprechende SessionID aufzuzeichnen; eine m3u8-Indexdatei-Antwort zurückzugeben, die eine ts-Verbindungsliste an das Endgerät trägt, wobei die m3u8-In-dexdatei-Antwort die SessionID des Endgerätes trägt; und eine HTTP-Verbindung mit dem Endgerät herzustellen; und
einen Anfragestatus des Endgeräts in Echtzeit zu überwachen, und wenn die SessionID nicht in der Anfrage enthalten ist und innerhalb einer vorgegebenen Zeit keine neue Anfrage empfangen wird, festzustellen, dass das Endgerät offline ist.

2. HLS-basierendes Kapazitätssteuerungsservicesystem nach Anspruch 1, wobei der SLB-Server ein Serviceanalysemodul, ein Sitzungs-steuerungsmodul, ein HTTP-Umleitungsmodul und ein Lastausgleichssteuerungsmodul umfasst, wobei
das Serviceanalysemodul konfiguriert ist, eine HLS-HTTP-Anfrage vom Endgerät zu analysieren, um anfragebezogene Informationen zu erhalten, die der Anfrage des Endgeräts entsprechen, und die erhaltenen anfragebezogenen Informationen an das Sitzungssteuerungsmodul und das Lastausgleichssteuerungsmodul auszugeben;
das Sitzungssteuerungsmodul konfiguriert ist, die SessionID der Anfrage des Endgeräts gemäß den anfragebezogenen Informationen zuzuweisen und die SessionID an das HTTP-Umleitungsmodul auszugeben;
das Lastausgleichssteuermodul konfiguriert ist, um den derzeit am besten geeigneten HLS-Videoserver für das Endgerät gemäß den anfragebezogenen Informationen in Verbindung mit Leistungsindizes auszuwählen, die von HLS-Videoservern unter Verwaltung des SLB-Servers gemeldet werden, und den ausgewählten HLS-Videoserver an das HTTP-Umleitungsmodul auszugeben; und
das HTTP-Umleitungsmodul konfiguriert ist, um die HTTP-Umleitungsnachricht (302) an das Endgerät zurückzugeben, wobei eine Serviceadresse des ausgewählten HLS-Videoservers in einem Standortfeld der HTTP-Header-Informationen der Nachricht übertragen wird und Informationen über die dem Endgerät zugewiesene SessionID in einem Parameter der Dienstadresse enthalten sind.

3. HLS-basiertes Kapazitätssteuerungsservicesystem nach Anspruch 2, bei dem das Lastausgleichssteuerungsmodul konfiguriert ist,
gemäß einem voreingestellten Zeitraum regelmäßig eine HTTP GET-Anfrage zu verwenden, um einen Leistungsindex von jedem HLS-Videoserver unter der Verwaltung des SLB-Servers anzufragen, auf dem sich das Lastausgleichssteuerungsmodul befindet; und
wenn das Endgerät eine HLS-HTTP-Anfrage an den SLB-Server initiiert, gemäß dem erhaltenen Leistungsindex jedes HLS-Videoservers, auswählen eines HLS-Videoservers, der derzeit die geringste Last hat, um einen Service bereitzustellen, und den ausgewählten HLS-Videoserver an das HTTP-Umleitungsmodul ausgeben.

4. HLS-basiertes Kapazitätssteuerungsdienstsystem nach Anspruch 3, bei dem, wenn die aktuelle Last jedes HLS-Videoservers einen voreingestellten oberen Schwellenwert erreicht hat, das Lastausgleichssteuerungsmodul ferner konfiguriert ist, um,
das Serviceanalysemodul zu benachrichtigen, die HLS-HTTP-Anfrage des Endgeräts abzulehnen, und bis ein Lastindex eines HLS-Videoservers unter der Verwaltung des SLB-Servers auf ein bedienbares Niveau abfällt, dem Serviceanalysemodul mitzuteilen, eine neue HLS-HTTP-Anfrage anzunehmen.

5. SLB-Server (101) (server load balancing) mit einem Serviceanalysemodul (201), einem Sitzungssteuerungsmodul (202), einem HTTP-Umleitungsmodul (203) (Hyper Text Transfer Protocol) und einem Lastausgleichssteuerungsmodul (204), wobei
das Serviceanalysemodul konfiguriert ist, eine HLS HTTP-Anfrage (Hyper Text Transfer Protocol Live Streaming) von einem Endgerät (103) zu analysieren, um anfragebezogene Informationen zu erhalten, die der Anfrage des Endgeräts entsprechen, und die erhaltenen anfragebezogenen Informationen an das Sitzungssteuerungsmodul und das Lastausgleichssteuerungsmodul auszugeben;
**dadurch gekennzeichnet, dass**
das Sitzungssteuerungsmodul konfiguriert ist, um eine Sitzungskennung (SessionTD) für die Anfrage des Endgeräts gemäß den anfragebezogenen Informationen zuzuweisen und die SessionID an das HTTP-Umleitungsmodul auszugeben;
das Lastausgleichssteuerungsmodul konfiguriert ist, um gemäß den anfragebezogenen Informationen in Verbindung mit Leistungsindizes, die von HLS-Videoservern (102) unter Verwaltung des SLB-Servers, auf dem sich das Lastausgleichssteuerungsmodul befindet, gemeldet werden, einen derzeit am besten geeigneten HLS-Videoserver für das Endgerät auszuwählen und den ausgewählten HLS-Videoserver an das HTTP-Umleitungsmodul auszugeben; und
das HTTP-Umleitungsmodul konfiguriert ist, um eine HTTP-Umleitungsnachricht (302) an das Endgerät zurückzugeben, wobei eine Serviceadresse des ausgewählten HLS-Videoservers in einem Standortfeld in HTTP-Header-Informationen der Nachricht getragen wird und Informationen über die dem Endgerät zugewiesene SessionID in einem Parameter der Serviceadresse enthalten sind.

6. SLB-Server nach Anspruch 5, wobei das Lastausgleichssteuerungsmodul konfiguriert ist, um:
gemäß einem voreingestellten Zeitraum periodisch eine HTTP GET-Anfrage verwenden, um einen Leistungsindex von jedem HLS-Videoserver unter der Verwaltung des SLB-Servers anzufragen; und
wenn das Endgerät eine HLS-HTTP-Anfrage an den SLB-Server initiiert, entsprechend dem erhaltenen Leistungsindex jedes HLS-Videoservers einen HLS-Videoserver auszuwählen, der derzeit die geringste Last hat, um einen Service bereitzustellen, und den ausgewählten HLS-Videoserver an das HTTP-Umleitungsmodul auszugeben.

7. SLB-Server nach Anspruch 6, wobei, wenn die aktuelle Last jedes HLS-Videoservers einen voreingestellten oberen Schwellenwert erreicht hat, das Lastausgleichssteuerungsmodul ferner konfiguriert ist, um,
das Serviceanalysemodul zu benachrichtigen, die HLS-HTTP-Anfrage des Endgeräts abzulehnen, und das Serviceanalysemodul zu benachrichtigen, eine neue HLS-HTTP-Anfrage anzunehmen, bis ein Lastindex eines HLS-Videoservers unter der Verwaltung des SLB-Servers auf ein bedienbares Niveau abfällt.

8. Ein HLS-basiertes Kapazitätssteuerungsverfahren, umfassend:
einen SLB-Server (Server Load Balancing), der eine HLS (Hyper Text Transfer Protocol Live Streaming)-HTTP (Hyper Text Transfer Protocol) -Anfrage von einem Endgerät empfängt (300), die HLS-HTTP-Anfrage an einen HLS-Videoserver umleitet (301, 302) und eine Serviceadresse des angegebenen HLS-Videoservers an das Endgerät zurückgibt (303); und
den angegebene HLS-Videoserver, der eine HLS-HTTP-Anfrage vom Endgerät empfängt (304), eine angefragte m3u8-Indexdatei an das Endgerät zurückgibt (305) und eine HTTP-Verbindung mit dem Endgerät herstellt (306);
**dadurch gekennzeichnet, dass** das Verfahren ferner umfasst:
der HLS-Videoserver den Anfragestatus jedes Endgerätes in Echtzeit überwacht und die Online-Endgerätebenutzer, nach den Endgeräten zählt, die Anfragen initiieren;
wobei die Umleitung der HLS HTTP-Anfrage an einen HLS-Videoserver und die Rückgabe einer Serviceadresse des angegebenen HLS-Videoservers an das Endgerät umfasst:
Zuweisen einer Sitzungskennung (SessionID) und
Auswählen (302) eines HLS-Videoservers anhand von Leistungsindizes von HLS-Videoservern unter Verwaltung des SLB-Servers und Zurückgeben (303) der zugewiesenen SessionID und einer Serviceadresse des ausgewählten HLS-Videoservers an das Endgerät unter Verwendung einer HTTP-Umleitungsnachricht (302);
der angegebene HLS-Videoserver, der eine angefragte m3u8-Indexdatei an das Endgerät zurückgibt und eine HTTP-Verbindung mit dem Endgerät herstellt, umfasst:
Empfangen einer Nachricht von dem Endgerät zum Anfragen der m3u8-Indexdatei, Aufzeichnen der SessionID, die dem Endgerät entspricht, und Zurückgeben einer m3u8-Indexdatei-Antwort, die eine ts-Verbindungsliste trägt, an das Endgerät, wobei die m3u8-Indexda-tei-Antwort die SessionID des Endgeräts trägt; und
wobei das Endgerät die enthaltene ts-Verbindungsliste analysiert, nachdem es eine Antwort auf eine m3u8-Indexdatei empfangen und eine Anfrage zur Herstellung einer HTTP-Verbindung mit dem HLS-Videoserver initiiert hat; wobei die dem Endgerät entsprechende SessionID in der vom Endgerät initiierten Anfrage an den HLS-Videoserver mitgeführt wird;
wobei ein Anfragestatus des Endgeräts in Echtzeit überwacht wird, und wenn die SessionID in einer Anfrage nicht mitgeführt wird und innerhalb einer vorgegebenen Zeit keine neue Anfrage an den HLS-Videoserver gesendet wird, wird das Endgerät als offline bestimmt.

9. HLS-basiertes Kapazitätssteuerungsverfahren nach Anspruch 8, wobei das Zählen der Online-Endgerätebenutzer umfasst:
wobei die SessionID in der vom Endgerät initiierten Anfrage an den HLS-Videoserver übertragen wird, und der HLS-Videoserver die SessionID des Endgerätes aufzeichnet, wobei, wenn ein Endgerät eine URL-Anfrage verwendet, die eine SessionID an den HLS-Videoserver überträgt,
der HLS-Videoserver bestimmt, ob der HLS-Videoserver die SessionID aufzeichnet, und wenn dies der Fall ist, wird 1 zu einer gleichzeitigen Nummer hinzugefügt, die der SessionID entspricht; wenn die SessionID nicht gespeichert wird, wird ein Datensatz der SessionID erstellt, und die entsprechende gleichzeitige Nummer wird als 1 aufgezeichnet; in der Zwischenzeit aktualisiert der HLS-Videoserver den neuesten Zeitpunkt;
wenn der HLS-Videoserver eine der SessionID entsprechende HTTP-Anfrageantwort abschließt, subtrahiert der HLS-Videoserver die der SessionID entsprechende gleichzeitige Zahl um 1 und aktualisiert die neueste Zeit; und
der HLS-Videoserver scannt periodisch alle SessionID-Informationen, und sobald die gleichzeitige Nummer der SessionID 0 ist und der letzte Zeitpunkt einen Offline-Schwellwert überschritten hat, stellt der HLS-Videoserver fest, dass das Endgerät, das der SessionID entspricht, offline war, und legt den Sitzungsstatus auf offline fest.

10. Computerlesbares Speichermedium, in dem computerausführbare Befehle gespeichert sind, **dadurch gekennzeichnet, dass** die computerausführbaren Befehle verwendet werden, um das Verfahren nach Anspruch 8 oder 9 auszuführen.

## Revendications

1. Système de service de contrôle de capacité basé sur HLS, comprenant un serveur SLB (équilibrage de la charge du serveur) (101) et un ou plusieurs serveurs vidéo HLS (102) (Hyper Text Transfer Protocol Live Streaming) basés sur un HTTP (Hyper Text Transfer Protocol), dans lequel
le serveur SLB est configuré pour recevoir une demande HLS HTTP d'un terminal (103), rediriger la demande HLS HTTP vers un serveur vidéo HLS et renvoyer une adresse de service du serveur vidéo HLS spécifié au terminal ; et
le serveur vidéo HLS spécifié est configuré pour recevoir une demande HLS HTTP du terminal, renvoyer un fichier d'index m3u8 demandé au terminal, établir une connexion HTTP avec le terminal ;
**caractérisé en ce que** le serveur vidéo HLS est en outre configuré pour surveiller l'état des demandes de chaque terminal en temps réel, et pour compter les utilisateurs de terminaux en ligne en fonction des terminaux qui initient les demandes ;
dans lequel le serveur SLB est configuré pour, recevoir la demande HLS HTTP du terminal, et attribuer une session identifier (SessionID) pour la demande ; et sélectionner un serveur vidéo HLS selon les indices de performance des serveurs vidéo HLS sous administration du serveur SLB, et renvoyer le SessionID attribué et une adresse de service du serveur vidéo HLS sélectionné au terminal en utilisant un message de redirection HTTP (302) ;
le serveur vidéo HLS spécifié est configuré pour,
recevoir un message, du terminal, pour demander le fichier d'index m3u8, et enregistrer le SessionID correspondant au terminal ; renvoyer une réponse du fichier d'index m3u8 portant une liste de connexion ts au terminal, dans laquelle la réponse du fichier d'index m3u8 porte le SessionID du terminal ; et établir une connexion HTTP avec le terminal
surveiller en temps réel l'état d'une demande du terminal, et si le SessionID n'est pas porté dans la demande et qu'aucune nouvelle demande n'est reçue dans un temps prédéfini, déterminer que le terminal a été hors ligne.

2. Système de service de contrôle de capacité basé sur HLS selon la revendication 1, dans lequel le serveur SLB comprend un module d'analyse de service, un module de contrôle de session, un module de redirection HTTP et un module de contrôle d'équilibrage de charge, dans lequel
le module d'analyse du service est configuré pour analyser une demande HLS HTTP du terminal afin d'obtenir les informations relatives à la demande correspondant à la demande du terminal, et pour transmettre les informations relatives à la demande obtenues au module de contrôle de session et au module de contrôle de l'équilibrage de charge ;
le module de contrôle de session est configuré pour assigner le SessionID à la demande du terminal en fonction des informations liées à la demande, et pour sortir le SessionID vers le module de redirection HTTP;
le module de contrôle de l'équilibrage de la charge est configuré pour sélectionner le serveur vidéo HLS actuellement le plus approprié pour le terminal en fonction des informations relatives à la demande, conjointement avec les indices de performance signalés par les serveurs vidéo HLS sous l'administration du serveur SLB, et sortir le serveur vidéo HLS sélectionné vers le module de redirection HTTP ; et
le module de redirection HTTP est configuré pour renvoyer le message de redirection HTTP (302) au terminal, dans lequel une adresse de service du serveur vidéo HLS sélectionné est portée dans un domaine de localisation dans les informations d'en-tête HTTP du message et les informations sur le SessionID attribué au terminal sont contenues dans un paramètre de l'adresse de service.

3. Système de service de contrôle des capacités basé sur HLS selon la revendication 2, dans lequel le module de contrôle de l'équilibrage des charges est configuré pour,
selon une période prédéfinie, utiliser périodiquement une demande HTTP GET pour demander un indice de performance à chaque serveur vidéo HLS sous l'administration du serveur SLB où se trouve le module de contrôle de l'équilibrage de charge ; et
lorsque le terminal lance une demande HLS HTTP vers le serveur SLB, en fonction de l'indice de performance obtenu de chaque serveur vidéo HLS, sélectionner un serveur vidéo HLS qui a la charge la plus faible actuellement pour fournir un service, et sortir le serveur vidéo HLS sélectionné vers le module de redirection HTTP.

4. Système de service de contrôle de capacité basé sur HLS selon la revendication 3, dans lequel si la charge actuelle de chaque serveur vidéo HLS a atteint un seuil supérieur prédéfini, le module de contrôle d'équilibrage de charge est configuré en outre pour,
notifier au module d'analyse du service de rejeter la demande HLS HTTP du terminal, et jusqu'à ce que l'indice de charge d'un serveur vidéo HLS sous l'administration du serveur SLB tombe à un niveau servable, notifier au module d'analyse du service d'accepter une nouvelle demande HLS HTTP.

5. Un serveur SLB (serveur à équilibrage de charge) (101), comprenant un module d'analyse de service (201), un module de contrôle de session (202), un module de redirection HTTP (Hyper Text Transfer Protocol) (203) et un module de contrôle d'équilibrage de charge (204), dans lequel
le module d'analyse de service est configuré pour analyser une demande HLS HTTP (Hyper Text Transfer Protocol Live Streaming) provenant d'un terminal (103) afin d'obtenir des informations relatives à la demande correspondant à la demande du terminal, et de transmettre les informations obtenues relatives à la demande au module de contrôle de session et au module de contrôle de l'équilibrage de charge ;
**caractérisé en ce que**
le module de contrôle de session est configuré pour attribuer un identificateur de session (SessionID) à la demande du terminal en fonction des informations liées à la demande, et sortir le SessionID vers le module de redirection HTTP ;
le module de contrôle de l'équilibrage de la charge est configuré pour sélectionner un serveur vidéo HLS actuellement le plus approprié pour le terminal en fonction des informations relatives à la demande, conjointement avec les indices de performance déclarés par les serveurs vidéo HLS (102) sous l'administration du serveur SLB où se trouve le module de contrôle de l'équilibrage de la charge, et sortir le serveur vidéo HLS sélectionné vers le module de redirection HTTP ; et
le module de redirection HTTP est configuré pour renvoyer un message de redirection HTTP (302) au terminal, dans lequel une adresse de service du serveur vidéo HLS sélectionné est portée dans un domaine de localisation dans les informations d'en-tête HTTP du message et les informations sur le SessionID attribué au terminal sont contenues dans un paramètre de l'adresse de service.

6. Serveur SLB selon la revendication 5, dans lequel le module de contrôle de l'équilibrage de charge est configuré pour :
selon une période prédéfinie, utiliser périodiquement une demande HTTP GET pour demander un indice de performance à chaque serveur vidéo HLS sous l'administration du serveur SLB ; et
lorsque le terminal lance une demande HLS HTTP vers le serveur SLB, en fonction de l'indice de performance obtenu de chaque serveur vidéo HLS, sélectionner un serveur vidéo HLS qui a la charge la plus faible actuellement pour fournir un service, et sortir le serveur vidéo HLS sélectionné vers le module de redirection HTTP.

7. Serveur SLB selon la revendication 6, dans lequel si la charge actuelle de chaque serveur vidéo HLS a atteint un seuil supérieur prédéfini, le module de contrôle de l'équilibrage de la charge est configuré en outre pour,
notifier au module d'analyse du service de rejeter la demande HLS HTTP du terminal, et jusqu'à ce que l'indice de charge d'un serveur vidéo HLS sous l'administration du serveur SLB tombe à un niveau servable, notifier au module d'analyse du service d'accepter une nouvelle demande HLS HTTP.

8. Procédé de contrôle des capacités basé sur HLS, comprenant :
un serveur SLB (équilibrage de la charge du serveur) recevant (300) une demande HLS (Hyper Text Transfer Protocol Live Streaming) HTTP d'un terminal, redirigeant (301, 302) la demande HLS HTTP vers un serveur vidéo HLS, et renvoyant (303) une adresse de service du serveur vidéo specified HLS au terminal ; et
le serveur vidéo HLS spécifié reçoit (304) une demande HLS HTTP du terminal, renvoie (305) un fichier d'index m3u8 demandé au terminal, établit (306) une connexion HTTP avec le terminal ;
**caractérisé en ce que**, le procédé comprend en outre :
le serveur vidéo HLS surveille l'état des demandes de chaque terminal en temps réel, et compte les utilisateurs de terminaux en ligne en fonction des terminaux qui initient les demandes ;
dans lequel la redirection de la demande HLS HTTP vers un serveur vidéo HLS, et renvoyer une adresse de service du serveur vidéo HLS spécifié au terminal comprend :
attribuer un identifiant de session (SessionID) et
sélectionner (302) un serveur vidéo HLS en fonction des indices de performance des serveurs vidéo HLS sous administration du serveur SLB, et renvoyer (303) le SessionID attribué et une adresse de service du serveur vidéo HLS sélectionné au terminal en utilisant un message de redirection HTTP 302 ;
le serveur vidéo HLS spécifié renvoyant un fichier d'index m3u8 demandé au terminal, et établissant une connexion HTTP avec le terminal comprend :
recevoir un message, de la part du terminal, pour demander le fichier d'index m3u8, enregistrer le SessionID correspondant au terminal, et renvoyer une réponse du fichier d'index m3u8 portant une liste de connexions ts au terminal, dans laquelle la réponse du fichier d'index m3u8 porte le SessionID du terminal ; et
le terminal analysant la liste de connexion ts contenue après avoir reçu la réponse au fichier d'index m3u8 et lancé une demande d'établissement d'une connexion HTTP au serveur vidéo HLS ; dans lequel le SessionID correspondant au terminal est porté dans la demande lancée par le terminal au serveur vidéo HLS ;
dans lequel l'état de la demande du terminal est surveillé en temps réel, et si le SessionID n'est pas porté dans une demande et qu'aucune nouvelle demande n'est envoyée au serveur vidéo HLS dans un temps prédéfini, le terminal est déterminé comme ayant été hors ligne.

9. Procédé de contrôle de capacité basé sur HLS selon la revendication 8, dans lequel le comptage des utilisateurs de terminaux en ligne comprend :
le SessionID étant porté dans la requête initiée par le terminal au serveur vidéo HLS, et le serveur vidéo HLS enregistrant le SessionID du terminal, dans lequel, lorsqu'un terminal utilise une demande URL portant un SessionID au serveur vidéo HLS,
le serveur vidéo HLS détermine si le serveur vidéo HLS enregistre le SessionID, et si oui, 1 est ajouté à un numéro concurrent correspondant au SessionID ; si le SessionID n'est pas enregistré, un enregistrement du SessionID est créé et le numéro concurrent correspondant est enregistré comme 1 ; entre-temps, le serveur vidéo HLS met à jour la dernière heure ;
lorsque le serveur vidéo HLS complète une réponse de la demande HTTP correspondant au SessionID, le serveur vidéo HLS soustrait de 1 le nombre concurrent correspondant au SessionID et met à jour l'heure la plus récente ; et
le serveur vidéo HLS scanne périodiquement toutes les informations du SessionID, et une fois que le numéro concurrent du SessionID est 0 et que la dernière heure a dépassé un seuil de temps hors ligne, le serveur vidéo HLS détermine que le terminal correspondant au SessionID a été hors ligne et définit un état de session pour être hors ligne.

10. Médium de stockage lisible par ordinateur dans lequel sont stockées des instructions exécutables par ordinateur, **caractérisé en ce que** les instructions exécutables par ordinateur sont utilisées pour exécuter le procédé selon la revendication 8 ou 9.
